# EUROPEAN PATENT APPLICATION

(11) **EP 1 516 538 A1**
(43) Date of publication of application: **23.03.2005**
(21) Application number: 03255761.3
(22) Date of filing: 16.09.2003
(51) Int. Cl.: A23G 3/02, A21B 3/13, B29C 33/40, A23G 1/22

(54) **Flexible mould for foodstuff**

(71) Applicant: Newell SA, 77210 Avon (FR)
(72) Inventor: Pezzana, Marco, 95948 Roissy CDG, Cedex (FR); Dagnone, Eduardo, 95948 Roissy CDG, Cedex (FR)
(74) Representative: Lawrence, John

(57) **Abstract**

A flexible foodstuff mould (10) for example for use in confectionary, bread making or baking, wherein the mould comprises a base (12), a wall (15) extending from the base, and a rim (16) projecting from the wall. The mould including at least two or more handles (17, 18) and a rigid rim area (19, 21; 45, 46) at the vicinity of each handle, other areas (40, 41) of the rim being flexible.

## Description

This invention relates to flexible moulds for foodstuff, and more particularly to flexible moulds for using in confectionary, bread making, baking or the like, and to a method of using such moulds.

To date consumers essentially have had a choice of three different types of foodstuff moulds, in particular, for use in confectionary, bread making, baking and the like. Namely, rigid metal moulds, flexible silicone moulds, and flexible silicone moulds with rigid rims.

More specifically, rigid metal moulds for foodstuff are typically made of aluminium, carbon steel or stainless steel and may optionally include a loose base which is removable to allow the contents of the mould to be more easily removed.

EP 0 992 195 (Lekue SL) discloses the use of silicone for manufacturing confectionary moulds and baking receptacles in general. The entire mould is envisaged as being flexible to ease removal of the contents of the mould.

EP 1 107 149 (Meroni and Fortunato) and FR 2827494 both disclose a flexible mould made of silicone for use in confectionary, bread-making or the like, in which the entire rim of the mould is provided with a support and stiffening element, preferably consisting of a metal wire. The use of a rigid/reinforced rim is intended to avoid any deformation of the mould under the strain of the contents.

According to a first aspect, the present invention provides a flexible foodstuff mould for use for example in confectionary, bread making or baking, the mould comprising a base, a wall extending from the base, and a rim projecting from the wall, characterised in that the mould includes at least two or more handles and a rigid rim area at the vicinity of each handle, other areas of the rim being flexible.

The rigid rim area may be due to reinforcement of the rim itself or the rigidity in the rim may be caused by having a rigid handle attached to an otherwise flexible area of the rim and imparting rigidity thereto.

The provision of rigid rim area or zone at the place where the handle is provided allows the user to lift and move the mould more easily, particularly when the mould has contents located therein (for example, foodstuffs to be cooked or baked, or put in the freezer or refrigerator), when compared to a fully flexible mould without any rigid rim areas at the places where the handles are attached,

Aside from the rigid rim near the handles the rest of the rim of the mould is flexible, and thus the desirable properties associated with this flexibility are retained in the mould.

We have appreciated that it is possible to have both the benefits of a rigid rim (the mould is easier to carry when full, and the user is less likely to spill the contents when carrying the mould), and a flexible, floppy, mould (easier to remove the cooked or chilled product from the mould, and the mould can deformed out of shape for storage if necessary) in the same mould.

The desirable properties retained in the flexible mould according to the invention include the ability of the mould to deform to allow it to be stored in a confined space, that is at least a little smaller than the 'natural' or relaxed size of the mould, thus the mould has the capacity to be more space efficient when stored. In addition, the flexibility of the rim, at least in some areas, allows the rim and the wall of the mould to be deformed making it easier to remove the contents without damage (easier in comparison with a mould with a rigid rim all the way around the circumference). For example, if the content was a cake the flexible sides of the mould could be peeled away from the side of the cake thereby allowing the cake to be removed without causing substantial damage to the cake.

Moulds according to the invention can be stacked like rigid trays for storage purposes. A mould of the present invention can also be bent somewhat if necessary. That is, the walls can be deformed by pressing down on them to flatten the mould so that it takes up less vertical space. Also the walls of the mould can be deformed somewhat by pushing opposed walls together, thereby distorting the shape of the mould somewhat to take up less lateral space. This can be useful if the mould is to be stored in a space not able to accommodate something of the size and shape of the mould in its un-deformed condition. It may be possible to fold the mould through 180°, or perhaps not that far - perhaps only a few, or a few tens, of degrees, depending upon the nature of the flexible regions of the rim that exist between the rigid, handle-vicinity, areas of the rim.

Preferably, in order for the rim to be flexible enough to have the above-described advantages, in relation to storage and removal of the contents, the rim must be sufficiently flexible that it deforms under the strain of the contents. Deformation of the rim when the mould is unsupported may be measured by measuring the movement of the rim from the horizontal plane when contents are in the mould and the mould is lifted off a supporting surface. This movement may be greater than 0.5cm, more preferably it is greater than 1cm. The movement may be 2, 3, 4, 5, 6, 7, 8, 9 or 10cm or more, or in a range defined between any of these parameters. The extent of the deformation will depend on the nature of the contents, their weight and their consistency, and the size of the mould.

The mould may be used with all types of foodstuffs, including cakes, bread products, confectionary products, pastry products, pies, jelly/jello, mousse, sorbet, ice cubes or ice cream.

Preferably the mould is resiliently deformable.

The mould may be useable in both traditional ovens and microwave ovens, and/or in freezers and refrigerators.

Preferably, the mould comprises silicone.

Preferably the mould has two handles and two rigid rim areas. The handles and rigid rim areas may be positioned in use on opposite sides of the mould. If the mould is substantially circular the handles may be substantially diametrically disposed.

The rigid rim areas associated with the handles when combined may extend around about 70% of the circumference of the rim. Preferably, the rigid rim areas combined are less than 70% of the circumference of the rim. Preferably, the rigid rim areas combined are less than 50% of the circumference of the rim. More preferably, the rigid rim areas combined are between 5 and 25% of the circumference of the rim. For example, the rigid rim areas combined may be 5 to 10% of the circumference of the rim. The percentage of the rim which is rigid is a balance between providing handles of a sufficient size to allow the mould to be readily picked up and used, and retaining sufficient flexibility in the mould to allow easy removal of the contents and storage of the mould.

The handles may be integrally formed with the mould. The handles may be formed from nylon inserts located in the rim, preferably the nylon inserts are not removable. The nylon inserts may serve to reinforce the handle to provide a rigid handle. The skilled man will appreciate that other suitable materials may be used instead of nylon.

Alternatively, the handles may be retrofitted to the mould. The handles may be removably located on the rim. The handles may be configured as portions which are arranged to fit over the rim of the mould when required. The rim of the mould may be flexible until the handles are positioned on the rim, the handles providing rigidity to the rim areas where they are located.

The mould may be configured such that the handles are arranged to allow the mould to be easily lifted from a support surface, such as a kitchen work surface, and to allow tension is be applied by a user laterally across the mould by the user pulling the handles in opposites direction along a transverse axis to keep the mould taut when contents are located therein, substantially reducing horizontal deformation of the mould.

According to a second aspect, the invention provides a method of using a flexible mould comprising a base, a wall projecting from the base, and a rim projecting from the wall, the mould including at least two or more handles and a rigid rim area at the vicinity of each handle, other areas of the rim being flexible the method comprising placing foodstuff in the mould, gripping the handles and pulling them apart to apply tension laterally across the mould in a transverse plane, picking up the mould while still applying tension and moving the mould to a desired place of use, such as an oven, without allowing the mould to deform to the extent necessary to spill foodstuffs during transit.

The mould used in the above method may be as described with reference to the first aspect of the invention.

The invention will now be described by way of example, with reference to the accompanying drawings, in which:
**Figure 1** shows a circular flexible mould resting on a flat surface;
**Figure 2** shows an alternative rectangular mould;
**Figure 3A** shows a cross section of the circular flexible mould of Figure 1;
**Figure 3B** shows a cross section of the mould of Figure 3A taken along line X-X';
**Figure 3C** shows a schematic plan view of the mould of Figures 1, 3A and 3B;
**Figure 4** shows the mould of Figure 1 being held in a flexed condition above a surface;
**Figure 5** shows the mould of Figures 1 and 4 held above a surface in a taut condition.
**Figure 6** shows a plan view of a section of a mould with an alternative handle and rigid rim arrangement to that depicted in Figure 3:
**Figure 7** shows a plan view of a section of a mould with a yet further alternative handle and rigid rim arrangement to that depicted in Figures 3 and 7;
**Figure 8** shows several moulds in a stacked arrangement;
**Figure 9A** shows a mould as depicted in Figure 1
**Figure 9B** shows the mould of Figure 9A in a flattened condition;
**Figure 10A** shows a plan view of the mould of Figure 1;
**Figure 10B** shows the mould Figure 10A in a squashed condition;
**Figure 11A** shows a mould as depicted in Figure 1;
**Figure 11B** shows the mould of Figure 11A in a folded condition;

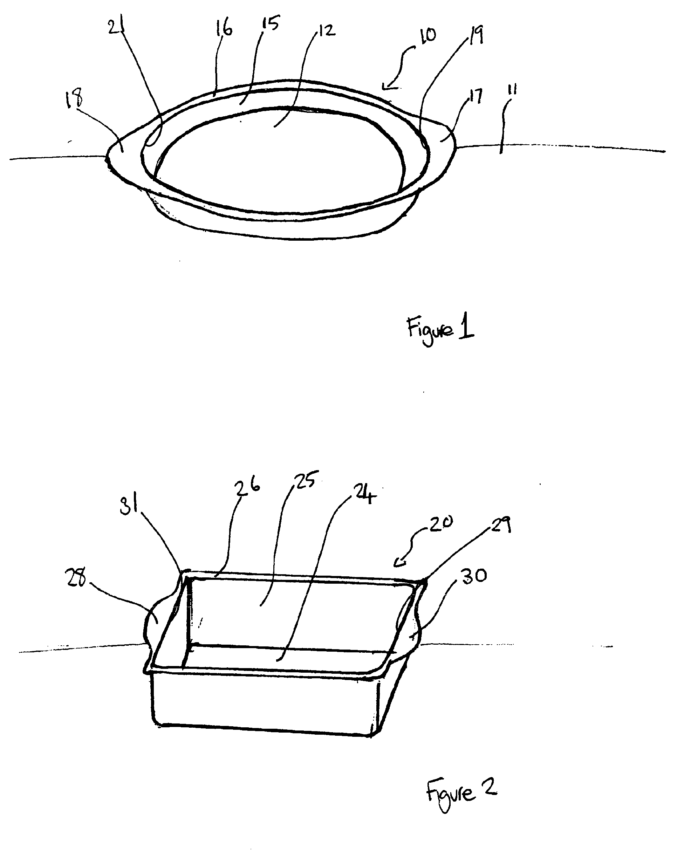

Figure 1 shows a flexible mould 10 according to the invention placed on a surface 11. The mould 10 comprises a base 12, a wall 15 upstanding from the base 12, and a rim 16 extending outwards from the wall 15. The base, wall and rim are integrally moulded. The base 10 comprises a planar circular sheet of flexible silicone. The wall 15 is configured from the same flexible silicone as the base 12 and is arranged to project away from the base 12. Typically the wall 15 projects from the base 12 at an angle of between 90 and 135 degrees. The rim 16 is also configured of the same flexible silicone material as the base 12 and the wall 15. In the preferred embodiment illustrated the rim 16 projects in a horizontal plane parallel to the plane of the base 12. The silicone material used to make the rim 16 may be slightly thicker than that used in the base 12 or the wall 15 so as to protect the rim 16 from damage, for example, to reduce the risk of the material tearing when the mould is bent or flexed.

The rim 16 includes two diametrically opposed rigid handles 17, 18 which have been reinforced to make them rigid. The area of the rim 16 where the handles 17, 18 are located is also reinforced creating rigid rim areas 19, 21. The handles 17, 18 are integrally moulded with the rest of the mould 10. The rigid handles 17, 18 and associated rigid rim areas 19, 21 allow the mould 10 to be easily picked up and moved by a user, particularly, when the mould 10 has fluid contents located therein, for example, raw cake mixture. In the absence of the handles 17, 18 and rigid rim areas 19, 21 the mould 10 would be difficult to handle and move. In the absence of the handles 17, 18 and rigid rim areas 19, 21 flexible moulds are often placed on metal baking tray to allow them to be moved without spilling the contents.

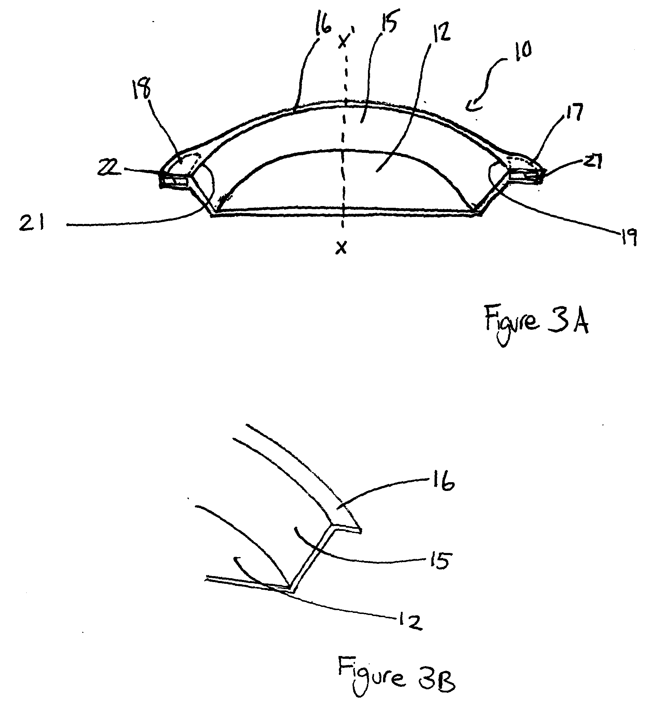

Figure 2 shows an alternative mould 20 to that depicted in Figure 1. In Figure 2 the mould 20 has a rectangular shape, rather than the circular shape of Figure 1.

Again the mould 20 comprises a base 24, a wall 25 upstanding from the base 24, and rim 26 extending parallel to the horizontal plane of the base 24. The rim 26 includes two rigid handles 28, 30 located opposite each other and two rigid rim areas 29, 31.

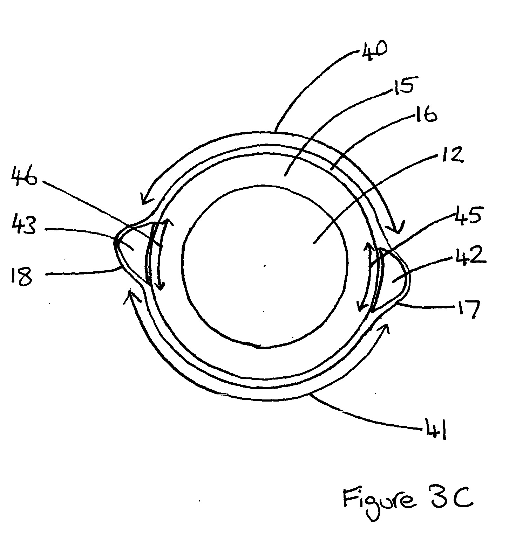

Figure 3A depicts a cross section of the circular mould 10 of Figure 1. A reinforcing nylon insert 22, 27 is illustrated located in both handles 17, 18. The nylon reinforcements 22, 27 provide the handles 17, 18 with some rigidity and extend into the rim 16 to provide two rigid rim areas 19, 21. The skilled man will appreciate that alternative reinforcement means could be used to make the handles 17, 18 rigid.

Figure 3B depicts a cross section of a mould 10 of Figure 3A along line X-X'. The rim 16 has no reinforcement in this region and in use is flexible.

Figure 3C depicts a schematic plan view of the mould of Figures 1, 3A and 3B. The flexible zones 40, 41 with an un-reinforced rim are illustrated alongside two rigid zones 45, 46 created by reinforcement 42, 43 of the handles 17, 18 and the rigid rim area 19, 21.

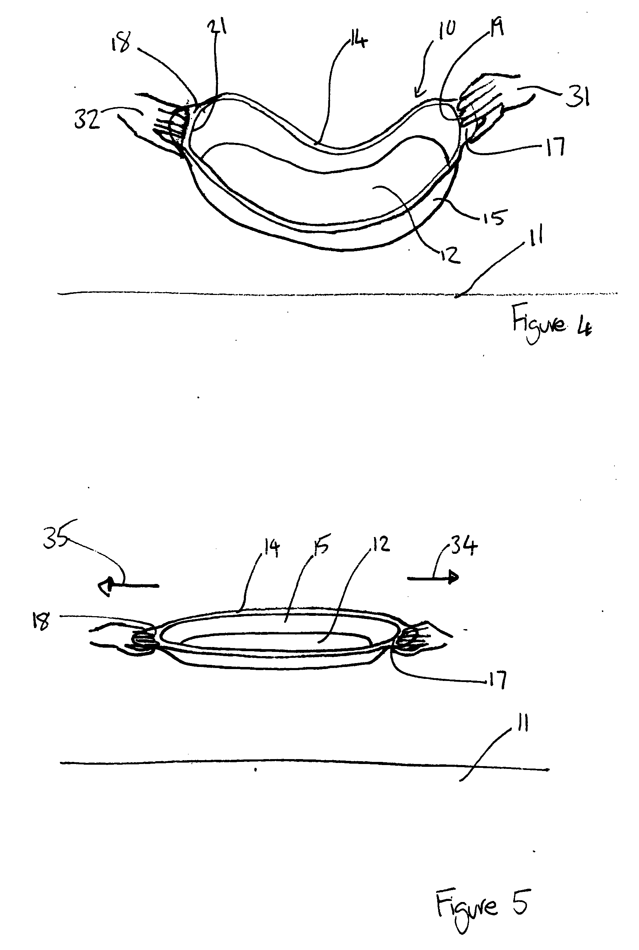

Figure 4 depicts the mould 10 of Figures 1 and 3A to 3C in a flexed condition. The mould 10 is depicted being held by the handles 17, 18 in a raised position above the surface 11. In order to lift the mould 10 the user uses one hand 31, 32 to grip each handle 17, 18 and then simply lifts the mould 10, the handles 17, 18 and the rigid rim areas 19, 21 providing the structure necessary to lift the mould 10. As the mould 10 is lifted from the surface 11 the flexibility in the rim 14 allows the mould 10 to deform as depicted in Figure 4.

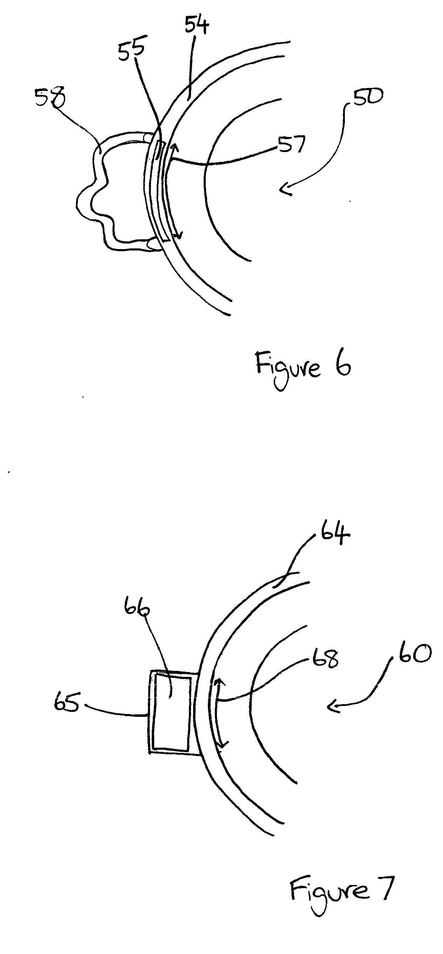

If the user applies tension laterally across the mould 10 by using the handles 17, 18 to pull on the mould 10 in opposite directions 34, 35 in the same transverse plane, as depicted in Figure 5, the rim 16 will remain in substantially the same horizontal plane around its entire circumference. Similarly, the base 12 will be held substantially flat and taut, and spillage of the mould 10 contents will be reduced.

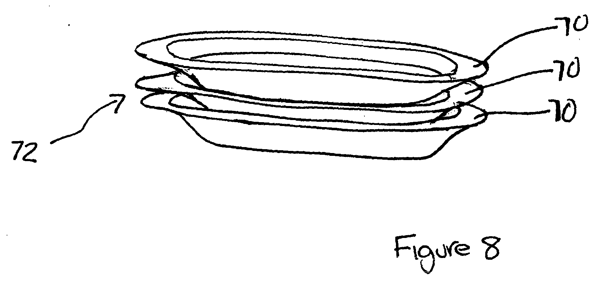

Figure 6 depicts a section of a mould with an alternative handle and rigid rim arrangement. The rim 54 includes reinforcement 55 which creates a rigid rim area 57, the rest of the rim 54 being flexible. The rigid rim area 57 gives the mould 50 sufficient rigidity to allow it to be picked up using flexible handles 58.

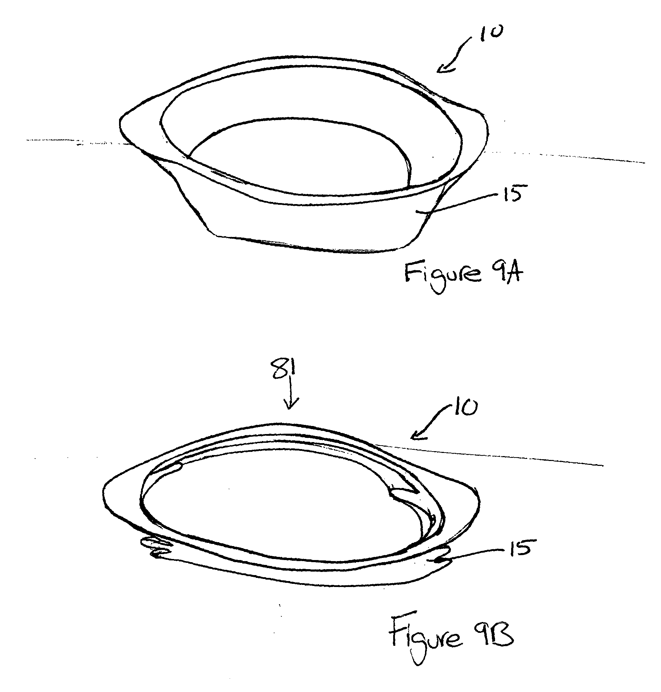

Figure 7 depicts a section of a mould 60 with a yet further alternative handle 65 and rigid rim 68 arrangement. In this embodiment the rim 64 has no reinforcement located therein. However the rigid handle 65, which is reinforced 66 prevents the mould 60 from flexing about the rim 64 where the handle 65 is attached, the handle 65 creates a rigid rim area 68 where it is attached to the rim 64.

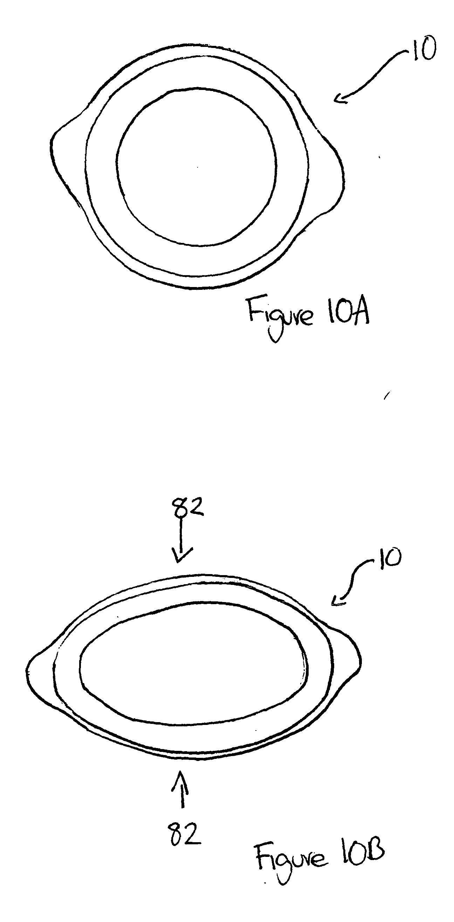

Figure 8 depict several moulds 70, according to Figure 1 in a stacked arrangement 72.

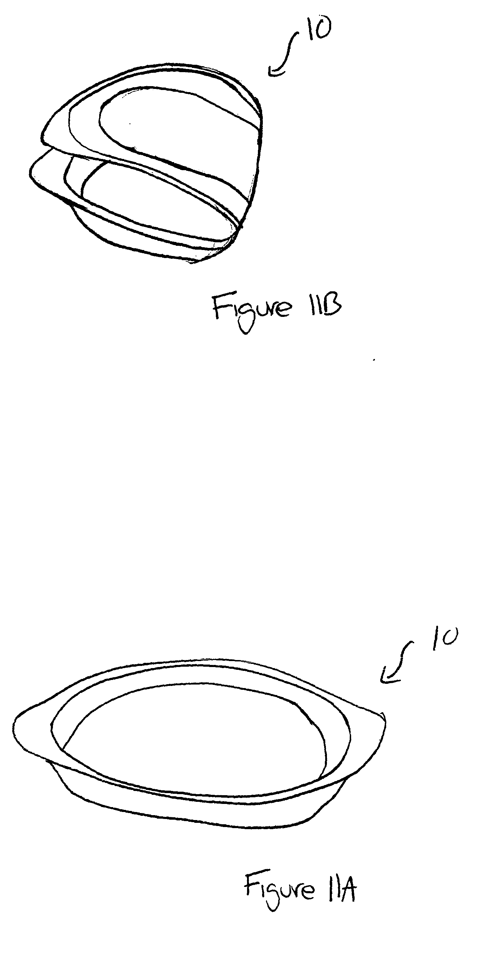

Figure 9A depicts a mould 10 as depicted in Figure 1, Figure 9B depicts the mould 10 with pressure applied to from above 81 to flatten the mould 10 by deforming the walls 15. In this configuration the mould 10 takes up less vertical space.

Figure 10A depicts a plan view of the mould 10 as depicted in Figure 1, Figure 10B depicts the mould 10 with pressure 82 applied to the sides of the mould 10 to squash the mould 10 laterally. In this configuration the mould 10 can occupy a space in which the un-deformed mould 10 could not be placed.

Figure 11A depicts a mould 10 as depicted in Figure 1, Figure 11B depicts the mould 10 folded about 180° into a storage condition.

## Claims

1. A flexible foodstuff mould (10) for use for example in confectionary, bread making or baking, the mould comprising a base (12), a wall (15) extending from the base, and a rim (16) projecting from the wall, **characterised in that** the mould includes at least two or more handles (17, 18) and a rigid rim area (19, 21; 45, 46) at the vicinity of each handle, other areas (40, 41) of the rim being flexible.

2. A mould according to claim 1 wherein the rigid rim area is reinforced (22, 27; 42, 43).

3. A mould according to claim 1 wherein the rigid rim area is caused by having a rigid handle attached to an otherwise flexible area of the rim and imparting rigidity thereto.

4. A mould according to any preceding claims wherein the deformation of the rim in the flexible area from the horizontal plane when the mould is unsupported and has contents located therein is greater than 0.5, 1, 2, 3, 4, 5, 6, 7, 8, 9 or 10cm or more.

5. A mould according to any preceding claims wherein the mould is resiliently deformable.

6. A mould according to any preceding claims wherein the mould comprises silicone.

7. A mould according to any preceding claims wherein the mould has two handles and two rigid rim areas.

8. A mould according to any preceding claims wherein the rigid rim areas combined extend around less than 70% of the circumference of the rim, for example less than 50%, for example between 5 and 25% of the circumference of the rim.

9. A mould according to any preceding claims wherein the handles are integrally formed with the mould.

10. A method of using a flexible mould (10) comprising a base (12), a wall (15) projecting from the base, and a rim (16) projecting from the wall, the mould including at least two or more handles (17, 18) and a rigid rim area (19, 21; 45, 46) at the vicinity of each handle, other areas of the rim (40, 42) being flexible the method comprising placing foodstuff in the mould, gripping the handles and pulling them apart to apply tension laterally across the mould in a transverse plane, picking up the mould while still applying tension and moving the mould to a desired place of use, such as an oven, without allowing the mould to deform to the extent necessary to spill foodstuffs during transit.
